# EUROPEAN PATENT APPLICATION

(11) **EP 3 985 183 A1**
(43) Date of publication of application: **20.04.2022**
(21) Application number: 20847183.9
(22) Date of filing: 22.06.2020
(51) Int. Cl.: E02F 9/26, G06Q 50/08

(54) **CONSTRUCTION MACHINE WORK INFORMATION GENERATION SYSTEM AND WORK INFORMATION GENERATION METHOD**

(30) Priority: 29.07.2019 JP 2019138435
(71) Applicant: KOBELCO CONSTRUCTION MACHINERY CO., LTD., Hiroshima-shi Hiroshima 731-5161 (JP)
(72) Inventor: OKADA, Tomofumi, Hiroshima-shi Hiroshima 731-5161 (JP); FUJIWARA, Sho, Hiroshima-shi Hiroshima 731-5161 (JP); HOSO, Yukihiro, Hiroshima-shi Hiroshima 731-5161 (JP); KYU, Shingun, Hiroshima-shi Hiroshima 731-5161 (JP); YAMASHITA, Koji, Hiroshima-shi Hiroshima 731-5161 (JP)
(74) Representative: TBK
(86) International application number: PCT/JP2020/024284
(87) International publication number: WO 2021/019951

(57) **Abstract**

A work information generation system includes: a data acquisition unit (40) that acquires time-series work data for determining work content of work performed by a construction machine (100) and attendant situation data representing an attendant situation including at least one of a situation of the construction machine (100) and a situation around the construction machine (100) when the work is performed; a work content determination unit (73) that determines the work content based on the time-series work data; and a reflection information generation unit (76) that generates, based on the work content and the attendant situation data, reflection information, which is information in which the attendant situation is reflected on the work content.

## Description

### Technical Field

The present invention relates to a work information generation system for generating information regarding work content of a construction machine at a work site.

### Background Art

As a technique for generating information regarding work content of a construction machine,

Patent Literature 1 discloses an excavator processing device. Based on a temporal change of an operation variable received from a work machine (excavator), this processing device determines work content when the operation variable is detected (paragraph 0012 of Patent Literature 1). The work content determined by the processing device includes, for example, simple drilling work, slewing leveling work, and loading work (paragraph 0015 of Patent Literature 1).

Information regarding work content of a construction machine can be utilized for various purposes during or after the work. Therefore, if possible to obtain detailed information regarding work content of the construction machine, work-related persons such as an orderer who orders work at the work site, a manager who manages work at the work site, an operator who operates a construction machine at the work site, and a worker who performs site work at the work site become easy to effectively utilize the detailed information for the various purposes.

However, since the work content determined by the processing device of Patent Literature 1 is only rough work content such as simple drilling work, slewing leveling work, and loading work, the work-related persons cannot necessarily effectively use the obtained work content.

### Citation List

### Patent Literature

Patent Literature 1: JP 2018-159268 A

### Summary of Invention

The present invention has been made to solve the above problems, and an object of the present invention is to provide a work information generation system and a work information generation method that enable the work-related persons to obtain detailed information regarding work content of a construction machine at a work site.

A work information generation system according to one aspect of the present invention is a work information generation system that generates work information of a construction machine at a work site, the work information generation system including: a data acquisition unit that acquires time-series work data for determining work content of work performed by the construction machine and attendant situation data representing an attendant situation including at least one of a situation of the construction machine and a situation around the construction machine when the work is performed; a work content determination unit that determines the work content based on the time-series work data; and a reflection information generation unit that generates, based on the work content and the attendant situation data, reflection information, which is information in which the attendant situation is reflected on the work content.

### Brief Description of Drawings

FIG. 1 is a block diagram illustrating a configuration of a work information generation system according to an embodiment.
FIG. 2 is a side view illustrating an example of a construction machine.
FIG. 3 is a perspective view illustrating an example of a plurality of feature points of the construction machine.
FIG. 4 is a view for explaining processing of estimating a posture of the construction machine in the work information generation system.
FIG. 5 is a view for explaining processing of extracting each of the plurality of objects in the work information generation system.
FIG. 6 is a view illustrating a time-series change in posture (time-series data of the posture) of the construction machine in the work information generation system.
FIG. 7 is a view for explaining processing of determining the work content from time-series data of a posture of the construction machine in the work information generation system.
FIG. 8 is a flowchart presenting calculation processing of the work information generation system.
FIG. 9 is a plan view of the construction machine at the work site.
FIG. 10 is a view illustrating a positional relationship among the construction machine, a construction material, and a worker at the work site.
FIG. 11 is a plan view of the construction machine at the work site.
FIG. 12 is a graph showing a plurality of loading works and standby time.
FIG. 13 is a side view for explaining a target operation and an actual operation of the construction machine.
FIG. 14 is a graph comparing work efficiency of the construction machine.

### Description of Embodiments

An embodiment of the present invention will be described below with reference to the drawings. Note that the following embodiment is merely an example embodying the present invention and does not limit the technical scope of the present invention.

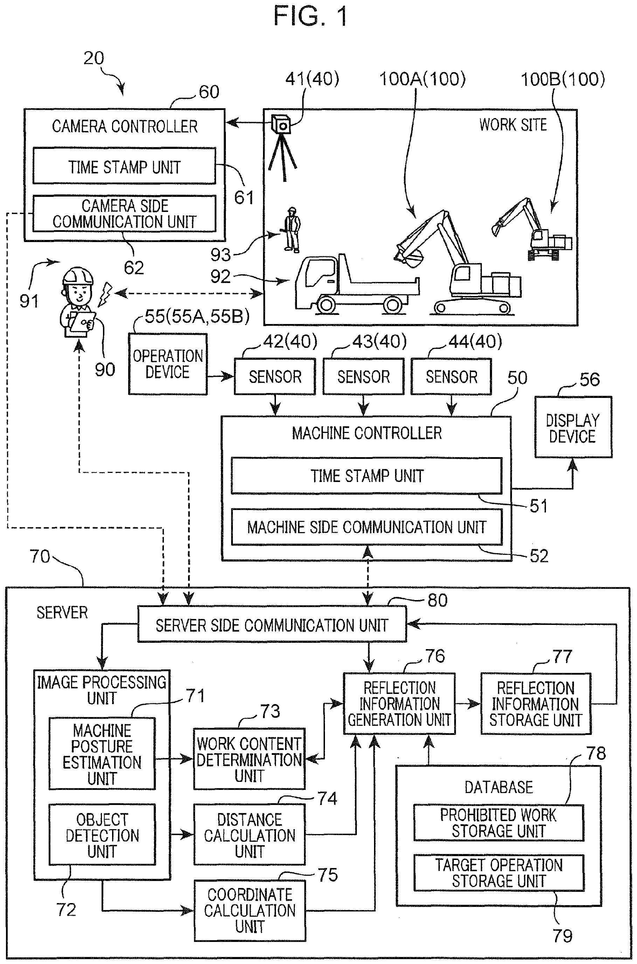

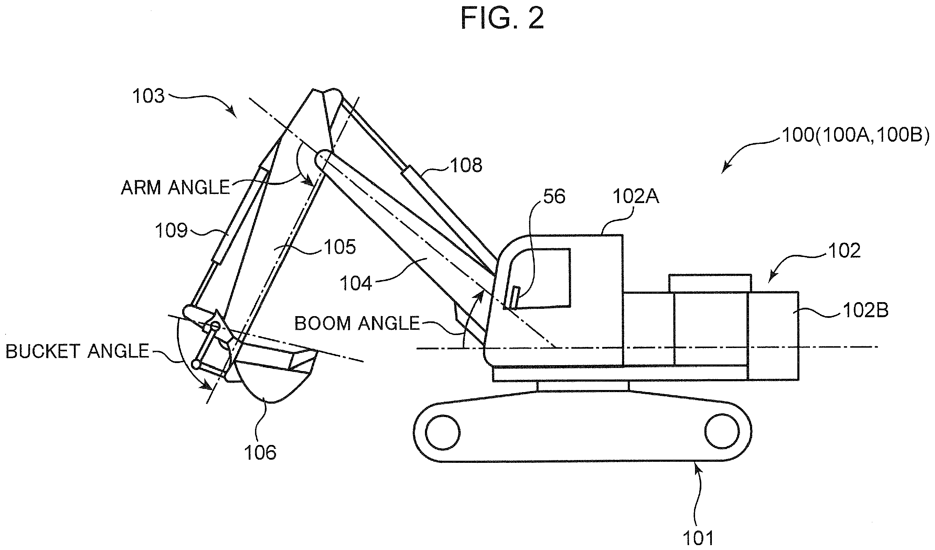

FIG. 1 is a block diagram illustrating a configuration of a work information generation system 20 according to the present embodiment. FIG. 2 is a side view illustrating a construction machine 100 that is a generation target of work information by the work information generation system 20. The work information generation system 20 is a system for generating work information of the construction machine 100 at a work site. In the specific example illustrated in FIG. 1, a plurality of construction machines 100 are arranged at a work site, and the work information generation system 20 generates work information of at least one construction machine 100 among the plurality of construction machines 100.

In the specific example illustrated in FIG. 1, the plurality of construction machines 100 arranged at the work site include a first hydraulic excavator 100A and a second hydraulic excavator 100B. As illustrated in FIG. 2, each of the hydraulic excavators 100A and 100B includes a crawler type lower travelling body 101, an upper slewing body 102 mounted on the lower travelling body 101 so as to be slewable about a slewing center axis perpendicular to a travelling surface thereof, and an attachment 103 mounted on the upper slewing body 102 in a hoisting manner.

The upper slewing body 102 includes a cab 102A constituting a front portion (main body front portion) of the upper slewing body 102, and a counterweight 102B constituting a rear portion (main body rear portion) of the upper slewing body 102. The attachment 103 includes a boom 104 supported by the upper slewing body 102 in a hoisting manner, an arm 105 rotatably coupled to a tip end of the boom 104, and a bucket 106 (tip end attachment) rotatably coupled to a tip end of the arm 105.

Each of the hydraulic excavators 100A and 100B includes a boom cylinder 107 that operates to cause the boom 104 to perform a hoisting operation with respect to the upper slewing body 102, an arm cylinder 108 that operates to cause the arm 105 to perform a rotating operation with respect to the boom 104, and a tip end attachment cylinder 109 that operates to cause the tip end attachment 106 to perform a rotating operation with respect to the arm 105.

The work of the construction machine 100 at the work site includes, for example, loading work, lifting work, drilling work, grading work, slope shaping work, traveling (traveling work), vehicle resting, and the like. The loading work is work for loading a holding target object such as earth and sand held by the bucket 106 to another place. The lifting work is work for lifting a support target object such as a construction material (e.g., pipe) supported by the bucket 106. The drilling work is work for drilling earth and sand on the ground by the bucket 106. The grading work is work for grading the ground by the bucket 106. The slope shaping work is work for shaping a slope surface that is an artificial slope formed by cutting earth or banking earth. The traveling work is a work for moving the construction machine 100 to a next work place at the work site. The vehicle resting means a state in which the construction machine 100 is stopped without performing actual work such as the loading work, the lifting work, the drilling work, the grading work, the slope shaping work, and the traveling work.

As illustrated in FIG. 1, the construction machine 100 further includes a display device 56. For example, the display device 56 is disposed at a position where an operator sitting on a driver's seat in the cab 102A of the construction machine 100 can visually recognize information displayed on the display device 56. The display device 56 displays reflection information of work content of the construction machine 100 output by a reflection information generation unit 76 described later. This allows the operator to visually obtain reflection information in which an attendant situation is reflected in the work content of the construction machine 100 at the work site.

A work information generation method according to the present embodiment includes: acquiring time-series work data for determining work content of work performed by the construction machine 100 and attendant situation data representing an attendant situation including at least one of a situation of the construction machine 100 and a situation around the construction machine 100 when the work is performed; determining the work content based on the time-series work data; and generating, based on the work content and the attendant situation data, reflection information, which is information in which the attendant situation is reflected on the work content.

Of the attendant situation, the situation of the construction machine 100 includes, for example, a situation in which work (attendant work) different from the work is performed simultaneously with work related to the work content, a situation of a load acting on the attachment 103 of the construction machine 100, a situation of an object loaded on the bucket 106 of the construction machine 100, and a situation related to a difference between a target operation set in advance as a target of an operation of the construction machine 100 when the construction machine 100 performs work and an actual operation that is an operation of the construction machine 100 when the construction machine 100 actually performs the work. Of the attendant situation, the situation around the construction machine 100 includes, for example, a situation of an object existing around the construction machine 100 at the work site.

Specific examples of the object include another construction machine different from the construction machine 100 at the work site, a vehicle such as a dump truck at the work site, a work-related person such as a worker who performs site work at the work site, a construction material such as a pipe at the work site, and a structure such as a building at the work site.

The reflection information of the work content is used as various indices such as an index for determining efficiency of the work, an index for determining a skill of an operator who has performed the work, and an index for evaluating safety of the work. Based on the reflection information having been obtained, the work-related person can more accurately perform determination of efficiency of the work, determination of the skill, evaluation of the safety, and the like.

As illustrated in FIG. 1, the work information generation system 20 includes a data acquisition unit 40, a machine controller 50, a camera controller 60, and a server 70. Each of the machine controller 50, the camera controller 60, and the server 70 includes, for example, a computer including a processor such as a CPU and a memory.

The machine controller 50 includes a machine side communication unit 52, the camera controller 60 includes a camera side communication unit 62, and the server 70 includes a server side communication unit 80. The server side communication unit 80 of the server 70 is connected to the machine side communication unit 52 so as to be able to transmit and receive data to and from the machine side communication unit 52 via a network. The server side communication unit 80 of the server 70 is connected to the camera side communication unit 62 so as to be able to transmit and receive data to and from the camera side communication unit 62 via a network. The server side communication unit 80 of the server 70 is connected to a terminal 91 so as to be able to transmit and receive data to and from the terminal 91 via a network. For example, as illustrated in FIG. 1, the terminal 91 includes a computer such as a mobile terminal used by a work-related person such as the manager 90.

The network may include, for example, a long distance information communication network such as the Internet and a mobile phone communication network. The network may include, for example, a communication network that enables the communication units to wirelessly communicate with each other at a distance of about several tens of meters to several hundreds of meters, such as specified low power radio, Bluetooth (registered trademark), and wireless local area network (wireless LAN). The network may be, for example, a wired communication network.

The data acquisition unit 40 acquires time-series work data and attendant situation data. The time-series work data is data for determining work content of work performed by the construction machine 100. The attendant situation data is data representing an attendant situation including at least one of a situation of the construction machine 100 and a situation around the construction machine 100 when the work is performed.

In the present embodiment, the data acquisition unit 40 includes an image-capturing device 41 and a plurality of sensors 42, 43, and 44.

The image-capturing device 41 acquires, in time series, a site image, which is an image of the work site. The site image includes an image of the construction machine 100 (e.g., one construction machine 100A) as a generation target of the work information and images of a plurality of objects. Each of the plurality of objects is an object different from the construction machine 100 among the objects existing at the work site. In the specific example illustrated in FIG. 1, the plurality of objects include the construction machine 100B, which is different from the construction machine 100A, which is a generation target of the work information, a vehicle (dump truck) 92, and a worker 93, but may include, for example, a construction material at the work site and a structure at the work site.

The time-series work data includes the site image acquired in time series by the image-capturing device 41. At least a part of the attendant situation data is configured by the site image including images of the plurality of objects.

The plurality of sensors 42, 43, and 44 are provided in the construction machine 100. The plurality of sensors include a pressure sensor 42, a pressure sensor 43, and a pressure sensor 44.

The pressure sensor 42 is a sensor for acquiring pressure data indicating that a travel operation device 55 provided in the construction machine 100 has received a travel operation. The travel operation device 55 includes a travel operation lever 55A that receives the travel operation and a remote control valve 55B. The remote control valve 55B operates a control valve not illustrated such that a traveling motor not illustrated rotates at a speed corresponding to the travel operation in a direction corresponding to the travel operation received by the travel operation lever 55A. The remote control valve 55B has a pair of output ports, and the control valve has a pair of pilot ports. The remote control valve 55B does not output pilot pressure when the operation lever 55A is at a neutral position. Accordingly, the control valve is held at the neutral position. On the other hand, when the operation lever 55A is operated in any of left and right directions from the neutral position, the remote control valve 55B supplies pilot pressure having a magnitude corresponding to an operation amount of the operation lever 55A from the output port corresponding to the direction in which the operation lever 55A is operated to the corresponding pilot port of the control valve. Due to this, the control valve operates by a stroke corresponding to the pilot pressure from the neutral position. The pressure sensor 42 detects the pilot pressure output from the remote control valve 55B, and outputs a detection result that is an electric signal corresponding to the pilot pressure. The detection result having been output is input to the machine controller 50.

The pressure sensor 43 is a sensor for detecting a load applied to the attachment 103. A specific aspect of the pressure sensor 43 is not particularly limited, but the pressure sensor 43 may include at least one of, for example, a pressure sensor that detects pressure of the boom cylinder 107, a pressure sensor that detects pressure of the arm cylinder 108, and a pressure sensor that detects pressure of the bucket cylinder 109. The pressure sensor 43 outputs a detection result that is an electric signal corresponding to a load applied to the attachment 103. The detection result having been output is input to the machine controller 50.

The pressure sensor 44 is a sensor for detecting the loadage of an object loaded on the bucket 106. A specific aspect of the pressure sensor 44 is not particularly limited, but the pressure sensor 43 may include, for example, a pressure sensor that detects pressure of the bucket cylinder 109. The pressure sensor 44 outputs a detection result that is an electric signal corresponding to the loadage of an object loaded on the bucket 106. The detection result having been output is input to the machine controller 50.

The machine controller 50 includes a time stamp unit 51, the machine side communication unit 52, and a machine control unit not illustrated. The machine control unit controls the overall operation of the construction machine 100. The time stamp unit 51 gives time information corresponding to an input time to the detection result to be input from each of the plurality of sensors 42, 43, and 44. The machine side communication unit 52 transmits, to the server 70, the detection result to which the time information has been given. The machine side communication unit 52 receives reflection information of work content of the construction machine 100 transmitted from the server 70, and the machine control unit of the machine controller 50 causes the display device 56 to display the reflection information.

The camera controller 60 includes a time stamp unit 61, the camera side communication unit 62, and a camera control unit not illustrated. The camera control unit controls the overall operation of the image-capturing device 41. The time stamp unit 61 gives time information corresponding to the input time to the site image to be input from the image-capturing device 41. The camera side communication unit 62 transmits, to the server 70, the site image to which the time information has been given.

The server 70 includes an image processing unit, a work content determination unit 73, a distance calculation unit 74, a coordinate calculation unit 75, a reflection information generation unit 76, a reflection information storage unit 77, a database, and the server side communication unit 80.

By performing image processing on the site image acquired by the image-capturing device 41, the image processing unit estimates a posture of the construction machine 100 based on an image (machine image) of the construction machine 100 included in the site image, and extracts the plurality of objects based on images of the plurality of objects included in the site image. A specific explanation is as follows.

The image processing unit includes a machine posture estimation unit 71 and an object extraction unit 72.

The machine posture estimation unit 71 estimates the posture of the construction machine 100 based on the machine image included in the site image. In the present embodiment, based on the machine image, the machine posture estimation unit 71 estimates the posture of the boom 104, the posture of the arm 105, the posture of the tip end attachment 106 (the bucket 106), the posture of the lower travelling body 101, and the posture of the upper slewing body 102. Data (posture information) regarding the posture estimated by the machine posture estimation unit 71 is input to the work content determination unit 73.

Specifically, by inputting the site image to a neural network (e.g., convolutional neural network) having a multilayer structure machine-learned by deep learning, for example, the machine posture estimation unit 71 extracts a plurality of feature points of the construction machine 100 in the machine image included in the site image. That is, the neural network is a posture estimation algorithm learned in advance using data regarding a feature point of the construction machine 100. The neural network referred to by the machine posture estimation unit 71 learns by, for example, learning processing based on training data indicating a correspondence relationship between an image of the construction machine 100 (hydraulic excavator) and coordinates of the feature point in the image.

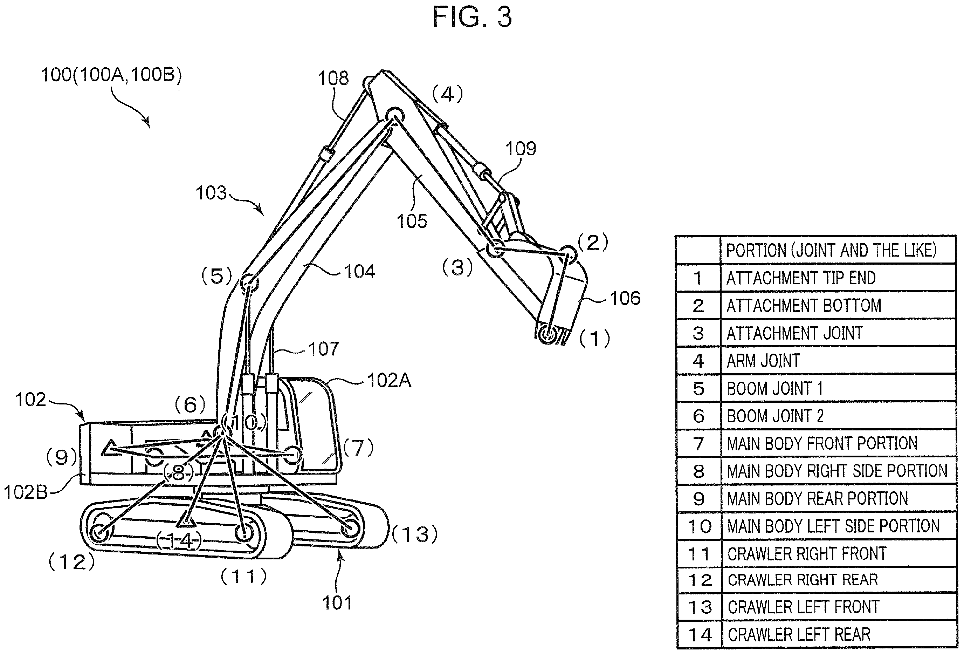

FIG. 3 illustrates an example of a plurality of feature points of the construction machine 100. In the neural network according to the present embodiment, a plurality of feature points of the construction machine 100 (hydraulic excavator) include an attachment tip end (1), an attachment bottom (2), an attachment joint (3), an arm joint (4), a boom joint 1 (5), a boom joint 2 (6), a main body front portion (7), a main body right side portion (8), a main body rear portion (9), a main body left side portion (10), a crawler right front (11), a crawler right rear (12), a crawler left front (13), and a crawler left rear (14). Note that the attachment tip end (1), the attachment bottom (2), and the attachment joint (3) indicate a tip end of the bucket 106, a bottom of the bucket 106, and a joint of the bucket 106, respectively. FIG. 3 does not illustrate the main body left side portion (10).

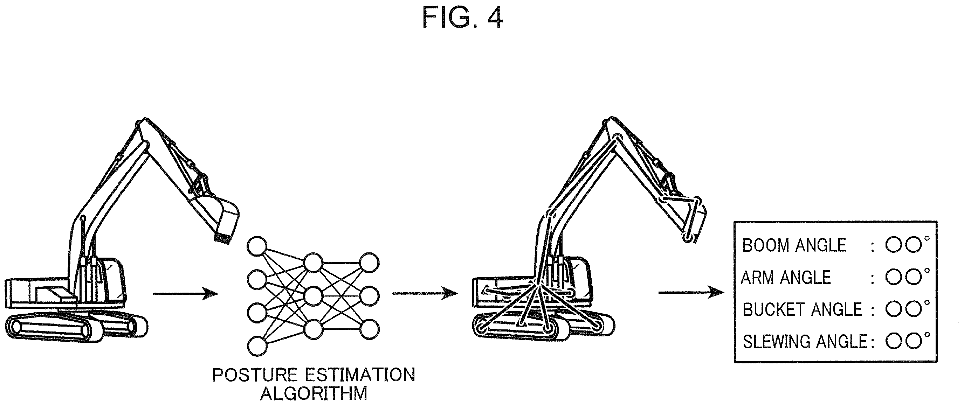

FIG. 4 is a view for explaining processing of estimating a posture of the construction machine 100 in the work information generation system 20. As illustrated in FIG. 4, the neural network (posture estimation algorithm) extracts and outputs coordinates of each of the plurality of feature points based on an image of the construction machine 100 to be input. Then, based on coordinates of the plurality of feature points output from the neural network, the machine posture estimation unit 71 estimates the posture of the construction machine 100, specifically, the posture of the boom 104, the posture of the arm 105, the posture of the tip end attachment 106, the posture of the lower travelling body 101, and the posture of the upper slewing body 102.

The posture of the boom 104 is specified by an angle (boom angle) of the boom 104 with respect to the upper slewing body 102, as illustrated in FIG. 2, for example. The posture of the arm 105 is specified by an angle (arm angle) of the arm 105 with respect to the boom 104, for example. The posture of the tip end attachment 106 is specified by an angle (bucket angle) of the bucket 106 with respect to the arm 105, for example. The posture of the lower travelling body 101 and the posture of the upper slewing body 102 are specified by an angle (slewing angle) of the upper slewing body 102 with respect to the lower travelling body 101, for example. Data (posture information) regarding the posture estimated by the machine posture estimation unit 71 is input to the work content determination unit 73.

Note that the machine posture estimation unit 71 may estimate the posture of the construction machine based on the image acquired by the image-capturing device by using a technology such as Openpose (registered trademark), for example.

The object extraction unit 72 extracts each of the plurality of objects based on the site image. Specifically, by inputting the site image to a neural network (e.g., convolutional neural network) having a multilayer structure machine-learned by deep learning, for example, the object extraction unit 72 extracts a plurality of feature points of a plurality of objects in each image (object image) of the objects included in the site image. That is, the neural network is an object extraction algorithm learned in advance using data regarding a feature point of each of the plurality of objects. The neural network referred to by the object extraction unit 72 learns by, for example, learning processing based on training data indicating a correspondence relationship between an image of each of the plurality of objects and coordinates of the feature point in the image.

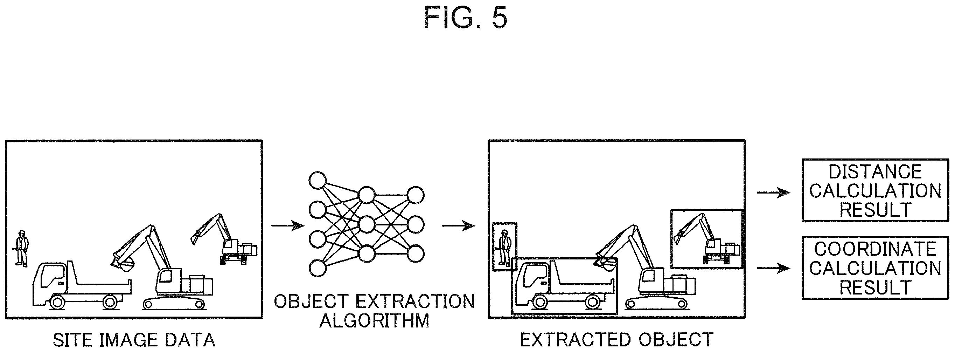

FIG. 5 is a view for explaining processing of extracting each of the plurality of objects in the work information generation system 20. As illustrated in FIG. 5, the neural network (object extraction algorithm) extracts each of the plurality of objects based on a site image including the plurality of objects that is input. The object extraction unit 72 surrounds, with a rectangular frame, each of the plurality of objects having been extracted.

Note that the object extraction unit 72 may extract each of the plurality of objects based on the site image acquired by the image-capturing device by using a technology such as Openpose (registered trademark), for example.

The work content determination unit 73 determines the work content based on a time-series change in the posture (time-series data of the posture) of the construction machine 100 estimated by the machine posture estimation unit 71.

Specifically, by inputting time-series data of the posture to a neural network (e.g., recurrent neural network) having a multilayer structure machine-learned by deep learning, for example, the work content determination unit 73 extracts a feature included in time-series data of the posture. That is, the neural network is a work classification algorithm learned in advance using time-series data regarding movement of a feature point of the construction machine 100. The neural network referred to by the work content determination unit 73 learns by, for example, learning processing based on training data indicating a correspondence relationship between a plurality of work content candidates defined in advance and time-series data of the posture of the construction machine 100 having been tagged. The plurality of work content candidates defined in advance include, for example, drilling work, grading work, slope shaping work, loading work, and lifting work.

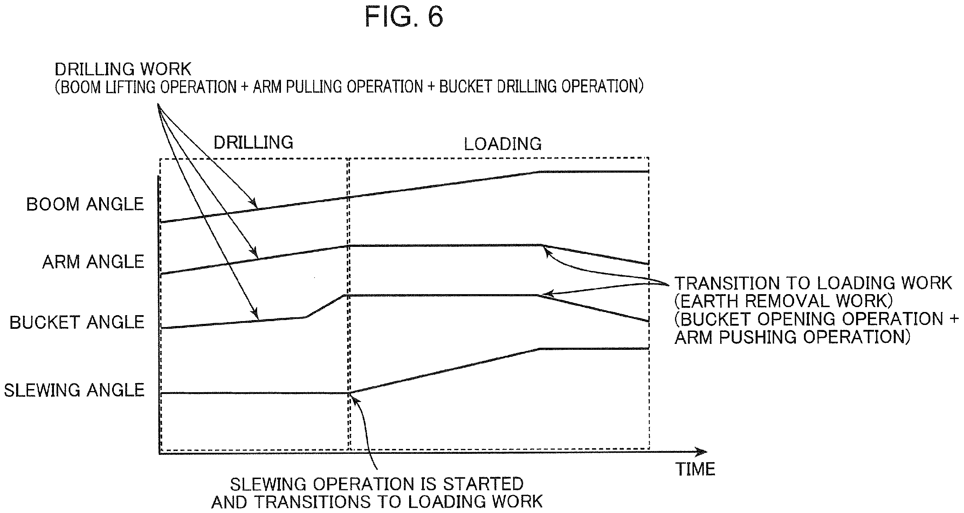

FIG. 6 is a view illustrating a time-series change in posture (time-series data of the posture) of the construction machine 100 in the work information generation system 20. The specific example illustrated in FIG. 6 illustrates time-series data (time-series data of posture) regarding the boom angle, the arm angle, the bucket angle, and the slewing angle.

The specific example illustrated in FIG. 6 illustrates a time-series change in posture (time-series data of the posture) of the construction machine 100 when the drilling work is performed, and a time-series change in posture (time-series data of the posture) of the construction machine 100 when the loading work to be performed after this drilling work is performed. Each of these works is performed with a specific time-series change in terms of the posture of the construction machine 100. Therefore, a time-series change in the posture of the construction machine 100 is relevant to the work content of the construction machine 100, and serves as an index for determination of the work content. A specific explanation is as follows.

Since the drilling work does not involve a slewing operation, the slewing angle is constant in the drilling work as illustrated in FIG. 6. The boom angle and the arm angle gradually increase from the early stage to the final stage of the drilling work. The bucket angle gradually increases from the early stage to the middle stage of the drilling work, and greatly increases at the final stage.

Since the loading work involves a slewing operation, the slewing angle starts to increase when the drilling work is switched to the loading work. The slewing angle and the boom angle gradually increase from the early stage to the middle stage of the loading work, and the arm angle and the bucket angle are constant from the early stage to the middle stage of the loading work. On the other hand, the slewing angle and the boom angle are constant at the final stage of the loading work, and the arm angle and the bucket angle gradually decrease at the final stage of the loading work.

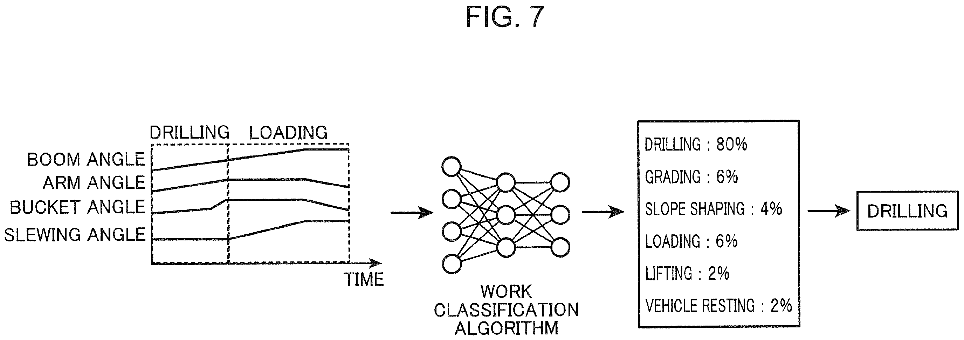

FIG. 7 is a view for explaining processing of determining the work content from time-series data of a posture of the construction machine 100 in the work information generation system 20. As illustrated in FIG. 7, an output layer of the neural network (work classification algorithm) executes calculation by a softmax function, for example, and outputs a score for each of the plurality of work content candidates. The work content determination unit 73 decides, as the work content, the work content candidate having the highest score based on the score of each of the plurality of work content candidates having been output from the output layer of the neural network. In the specific example of FIG. 7, the work content determination unit 73 determines "drilling work", having the highest score, among the plurality of work content candidates as the work content. The work content determined by the work content determination unit 73 is input to the reflection information generation unit 76.

The distance calculation unit 74 calculates a relative distance between the construction machine 100 and each of the plurality of objects based on the machine image and the object images included in the site image.

The coordinate calculation unit 75 calculates coordinates of a preset specific portion of the construction machine 100. The specific portion can be set to, the tip end portion of the bucket 106, for example, but is not limited thereto.

The reflection information generation unit 76 generates, based on the work content and the attendant situation data, reflection information of the work content, which is information in which the attendant situation is reflected on the work content.

The reflection information storage unit 77 stores the reflection information as a history.

The reflection information stored in the reflection information storage unit 77 is transmitted to the terminal 91 when a work-related person such as the manager 90, for example, makes an inquiry request for inquiring the reflection information from the terminal 91 to the server 70. This enables the manager 90 to give an operator or a worker at the work site a work instruction or improvement. In this case, the terminal 91 is preferably configured to be communicably connected to a machine controller 30 of the construction machine 100 at the work site or a mobile terminal not illustrated of the worker via the network.

The database stores in advance various data necessary when the reflection information generation unit 76 generates the reflection information of the construction machine 100. The database includes a prohibited work storage unit 78 and a target operation storage unit 79.

The prohibited work storage unit 78 stores a combination of the work of the construction machine 100 and attendant work that is another work prohibited in advance from being performed simultaneously with the work by the construction machine 100. Specifically, the prohibited work storage unit 78 stores, for example, a combination of the drilling work and the traveling work as the prohibited work.

The target operation storage unit 79 stores a target operation set in advance as a target of an operation of the construction machine when the construction machine performs the work. Specifically, the target operation storage unit 79 stores, for example, a target trajectory of the tip end portion of the bucket 106 in the drilling work.

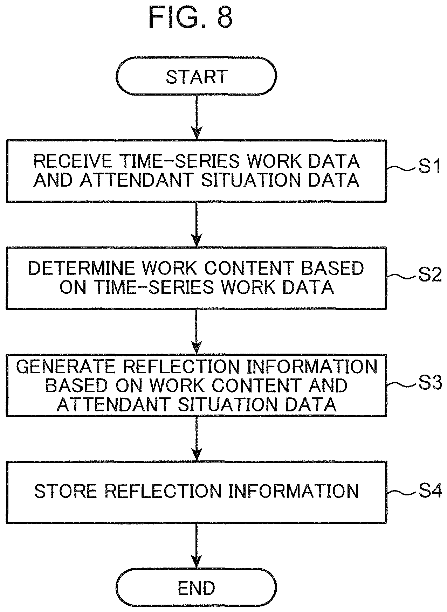

FIG. 8 is a flowchart presenting calculation processing of the work information generation system 20. As illustrated in FIG. 8, the server side communication unit 80 of the server 70 receives the time-series work data and attendant situation data (step S1). The time-series work data includes the site image acquired in time series by the image-capturing device 41. The attendant situation data includes the site image acquired by the image-capturing device 41 and data acquired by the sensors 42, 43, and 44.

Next, the work content determination unit 73 determines the work content based on the time-series work data (step S2), and the reflection information generation unit 76 generates, based on the work content and the attendant situation data, reflection information that is information in which the attendant situation is reflected on the work content (step S3). The reflection information output from the reflection information generation unit 76 is stored in the reflection information storage unit 77 (step S4).

Next, generation of the reflection information will be described by exemplifying the following first to ninth combinations as combinations of the work content and the attendant situation data.

### (1) First combination

In the first combination, the work content is set to the loading work, and the attendant situation data is set to the distance between the construction machine 100 and the dump truck 92 existing around the construction machine.

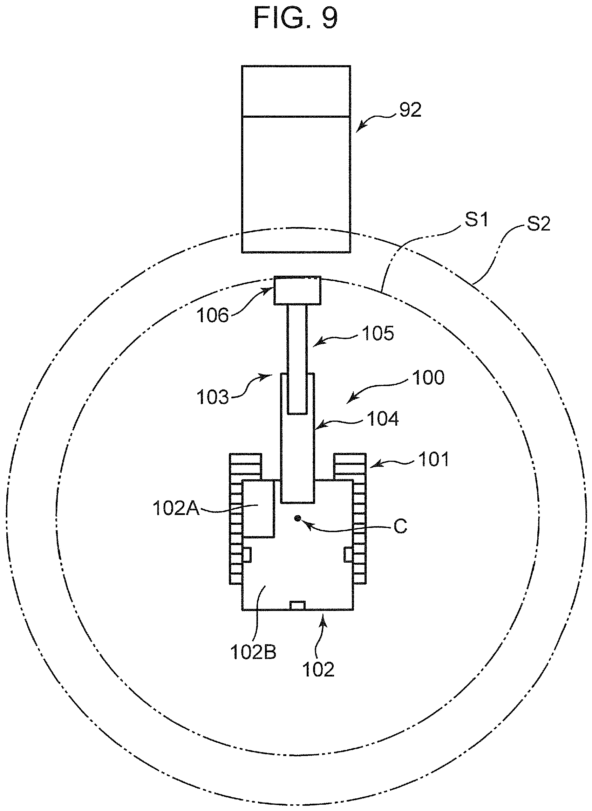

FIG. 9 is a plan view of the construction machine 100 at the work site. As illustrated in FIG. 9, the upper slewing body 102 of the construction machine 100 is configured to be slewable about a slewing center axis C with respect to the lower travelling body 101. Therefore, a trajectory drawn by the tip end portion of the bucket 106 when the upper slewing body 102 slews is indicated by a two-dot chain line S1 in FIG. 9. A two-dot chain line S2 in FIG. 9 is a circle having a diameter larger than that of the two-dot chain line S1.

The reflection information generation unit 76 generates reflection information of the work content based on the work content of the construction machine 100 input from the work content determination unit 73 and the distance input from the distance calculation unit 74, i.e., the distance between the construction machine 100 and the dump truck 92. The reflection information is information that the work content of the construction machine 100 is loading work of an object (earth and sand or the like) loaded onto the dump truck 92.

For example, the reflection information generation unit 76 compares a reference position set in advance in the dump truck 92 with a reference range set in advance, generates reflection information that the work content of the construction machine 100 is loading work of an object loaded onto the dump truck 92 when the reference position is included in the reference range, and outputs the reflection information. The reflection information having been output is stored in the reflection information storage unit 77.

The reference position of the dump truck 92 is not particularly limited, and can be arbitrarily set. Specifically, the reference position can be set, for example, at a rear end of a load-carrying platform of the dump truck 92 and at a center position in the vehicle width direction. The reference range is only required to be a range where it can be specified that the loading work is loading work onto the dump truck 92, and is not particularly limited. Specifically, the reference range can be set inside a trajectory of a circle drawn by the tip end portion of the bucket 106 indicated by the two-dot chain line S1 illustrated in FIG. 9, for example. The reference range can also be set inside a circle indicated by the two-dot chain line S2 illustrated in FIG. 9, for example. The reference range may be set based on the position of the tip end portion of the bucket 106 at the time point when the reflection information generation unit 76 compares the reference position with the reference range, or may be set based on the position when the tip end portion of the bucket 106 is farthest from the slewing center axis C.

### (2) Second combination

In the second combination, the work content is set to the lifting work, and the attendant situation data is set to the distance between the construction machine 100 and a construction material 94 such as a pipe existing around the construction machine and the worker 93.

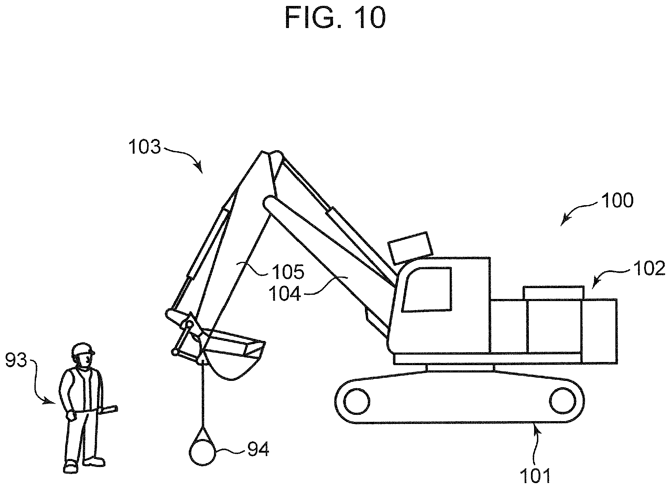

FIG. 10 is a view illustrating the positional relationship among the construction machine 100, the construction material 94, and the worker 93 at the work site. As illustrated in FIG. 10, in the lifting work, the construction material 94 and the worker 93 exist around the construction machine 100.

The reflection information generation unit 76 generates reflection information of the work content based on the work content of the construction machine 100 input from the work content determination unit 73 and the distance input from the distance calculation unit 74, i.e., the distance between the construction machine 100 and the construction material 94 and the distance between the construction machine 100 and the worker 93. The reflection information is information that the work content of the construction machine 100 is load hoisting work of pulling up the pipe.

For example, the reflection information generation unit 76 compares a reference position set in advance in each of the construction material 94 and the worker 93 with a reference range set in advance, and when the reference position is included in the reference range, generates reflection information that the work content of the construction machine 100 is load hoisting work of pulling up the pipe, and outputs the reflection information. The reflection information having been output is stored in the reflection information storage unit 77.

The reference position of each of the construction material 94 and the worker 93 is not particularly limited, and can be arbitrarily set. Specifically, the reference position can be set to, for example, a center position of the construction material 94 and a center position of the worker 93 (e.g., position near the abdomen). The reference range can be set inside a trajectory of a circle drawn by the tip end portion of the bucket 106 indicated by the two-dot chain line S1 illustrated in FIG. 9, for example.

### (3) Third combination

In the third combination, the work content is set to the drilling work, and the attendant situation data is set to the distance between the construction machine 100 and the worker 93 existing around the construction machine.

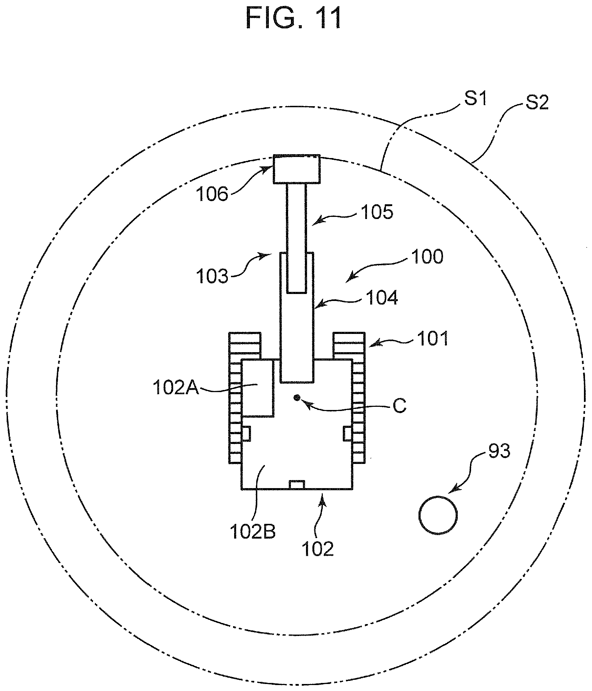

FIG. 11 is a plan view of the construction machine 100 at the work site. In FIG. 11, two two-dot chain lines S1 and S2 similar to those described in FIG. 9 are drawn.

The reflection information generation unit 76 generates reflection information of the work content based on the work content of the construction machine 100 input from the work content determination unit 73 and the distance input from the distance calculation unit 74, i.e., the distance between the construction machine 100 and the worker 93. The reflection information is information of being irregular drilling work in which the worker 93 exists within a work range of the construction machine 100.

For example, the reflection information generation unit 76 compares a reference position set in advance in the worker 93 with a reference range set in advance, generates reflection information that the work content of the construction machine 100 is the irregular drilling work when the reference position is included in the reference range, and outputs the reflection information. The reflection information having been output is stored in the reflection information storage unit 77.

The reference position of the worker 93 is not particularly limited, and can be arbitrarily set. Specifically, the reference position can be set to, for example, a center position of the worker 93 (e.g., position near the abdomen). The reference range can be set inside a trajectory of a circle drawn by the tip end portion of the bucket 106 indicated by the two-dot chain line S1 illustrated in FIG. 11, for example. The reference range can also be set inside a circle indicated by the two-dot chain line S2 illustrated in FIG. 11, for example. The reference range may be set based on the position of the tip end portion of the bucket 106 at the time point when the reflection information generation unit 76 compares the reference position with the reference range, or may be set based on the position when the tip end portion of the bucket 106 is farthest from the slewing center axis C.

### (4) Fourth combination

In the fourth combination, the work content is set to the drilling work, and the attendant situation data is set to pressure data indicating that the travel operation device 55 has received the travel operation.

The reflection information generation unit 76 generates and outputs reflection information of the work content based on the work content of the construction machine 100 input from the work content determination unit 73 and a detection result output from the pressure sensor 42. The reflection information is information that a prohibited work in which the drilling work and the traveling work (attendant work) are simultaneously performed is being performed. A combination of the drilling work and the traveling work is stored in advance in the prohibited work storage unit. The reflection information having been output is stored in the reflection information storage unit 77.

### (5) Fifth combination

In the fifth combination, the work content is set to the loading work, and the attendant situation data is data in which time required for each of a plurality of loading works and standby time between loading work and subsequent loading work are compared.

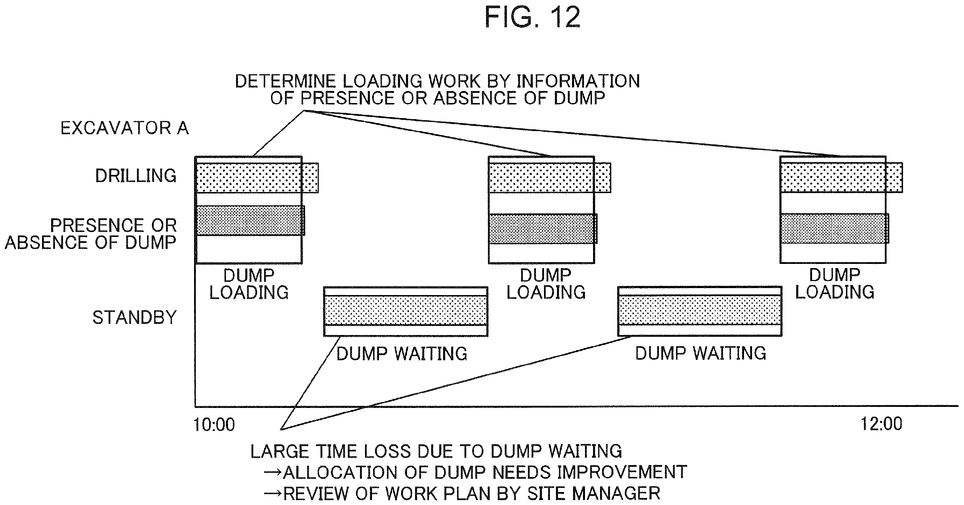

FIG. 12 is a graph showing the plurality of loading works and the standby time. The reflection information generation unit 76 generates reflection information of the plurality of loading works as described in the first combination, and the reflection information storage unit 77 stores the time required for each loading work together with the reflection information of each of the plurality of loading works. The reflection information generation unit 76 measures the standby time between loading work and subsequent loading work, and the reflection information storage unit 77 stores the standby time output from the reflection information generation unit 76. The reflection information generation unit 76 compares time required for the loading work with the standby time that are stored in the reflection information storage unit 77, determines efficiency of these works, and outputs the determination result. In the specific example illustrated in FIG. 12, since the standby time is longer than the loading time, the reflection information output from the reflection information generation unit 76 is information of being loading work with low efficiency. The reflection information having been output is stored in the reflection information storage unit 77.

### (6) Sixth combination

In the sixth combination, the work content is set to the drilling work and the grading work, and the attendant situation data is set to pressure data indicating a load applied to the attachment 103. Since in both the drilling work and the grading work, the bucket 106 performs similar operations near the ground surface, the work content determination unit 73 sometimes makes uncertain determination that the work content of the construction machine 100 is either the drilling work or the grading work.

In such a case, the reflection information generation unit 76 generates and outputs reflection information of the work content based on the work content of the construction machine 100 input from the work content determination unit 73 and a detection result output from the pressure sensor 43. If the detection result is equal to or greater than a preset threshold, the reflection information is information (confirmation information) of being the drilling work from the drilling work and the grading work. On the other hand, if the detection result is less than a preset threshold, the reflection information is information (confirmation information) of being the grading work from the drilling work and the grading work. The reflection information having been output is stored in the reflection information storage unit 77.

### (7) Seventh combination

In the seventh combination, the work content is set to the loading work, and the attendant situation data is set to pressure data indicating the loadage of an object loaded onto the bucket 106. In the loading work, an operation in which the upper slewing body 102 slews in a state where a loaded abject such as earth and sand is loaded on the bucket 106 (loading slewing operation), and an operation in which the loaded object is moved from the bucket 106 to the load-carrying platform of the dump truck 92 and then returns to a drilling position (return slewing operation) are performed. Both the loading slewing operation and the return slewing operation are operations in which the bucket 106 draws an arc trajectory around the slewing center axis C, and therefore the work content determination unit 73 determines that the work content of the construction machine 100 is the loading work even in any operation.

The reflection information generation unit 76 generates and outputs reflection information of the work content based on the work content of the construction machine 100 input from the work content determination unit 73 and a detection result output from the pressure sensor 44. If the detection result is equal to or greater than a preset threshold, the reflection information is information of being the loading slewing operation of the loading work. On the other hand, if the detection result is less than a preset threshold, the reflection information is information of being the return slewing operation of the loading work. The reflection information having been output is stored in the reflection information storage unit 77.

### (8) Eighth combination

In the eighth combination, the work content is set to the drilling work, and the attendant situation data is set to data regarding a difference between the target operation and an actual operation that is an operation of the construction machine when the construction machine actually performs the work.

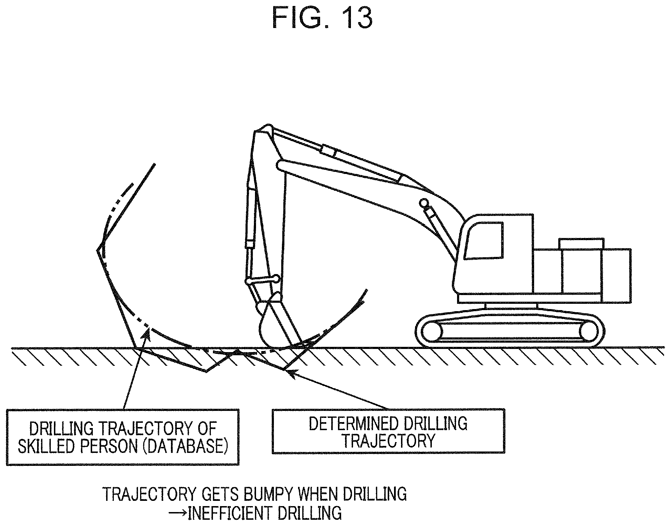

FIG. 13 is a side view for explaining the target operation and the actual operation. In the specific example illustrated in FIG. 13, the target operation is a trajectory of the tip end portion of the bucket 106 when the drilling work is performed by a skilled operator, and the trajectory is stored in advance in the target operation storage unit 79 of the database.

The reflection information generation unit 76 generates and outputs reflection information of the work content based on the work content of the construction machine 100 input from the work content determination unit 73 and time-series data of coordinates of the tip end portion of the bucket 106 input from the coordinate calculation unit 75. For example, the reflection information generation unit 76 generates reflection information that the larger separation between the target operation and the actual operation is, the less efficient drilling work is. for example, the reflection information generation unit 76 may generate reflection information that drilling work is less efficient as a trajectory of the actual operation is not as a smooth curve as a trajectory of the target operation and a combination of linear motions as illustrated in FIG. 13. The reflection information output from the reflection information generation unit 76 is stored in the reflection information storage unit 77.

### (9) Ninth combination

In the ninth combination, the work content is set to the drilling work, and the attendant situation data is set to pressure data indicating the loadage of an object loaded on the bucket 106.

The reflection information generation unit 76 generates and outputs reflection information of the work content based on the work content of the construction machine 100 input from the work content determination unit 73 and a detection result output from the pressure sensor 44.

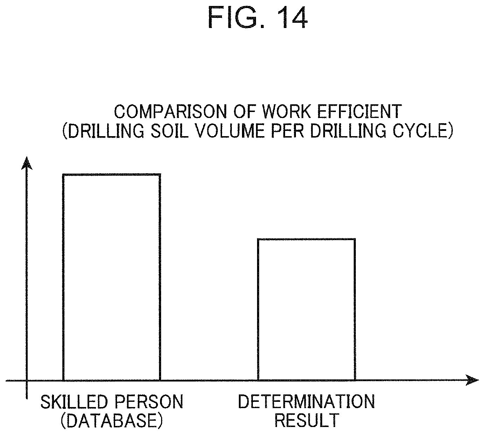

FIG. 14 is a graph comparing work efficiency in the drilling work of the construction machine 100. The target operation storage unit 79 stores in advance a soil volume when the drilling work is performed by a skilled operator as a target value of the soil volume to be loaded onto the bucket 106 in one drilling work.

The reflection information generation unit 76 generates and outputs reflection information including a result of evaluating work efficiency and a skill of an operator based on the target value. The reflection information having been output is stored in the reflection information storage unit 77.

Note that the first to ninth combinations have been exemplified as combinations of the work content and the attendant situation data, but the combinations are not limited thereto, and the reflection information can be generated based on other various combinations. For example, the reflection information generation unit 76 can generate reflection information of the work content based on the work content (e.g., drilling work) of the construction machine 100 input from the work content determination unit 73 and a detection result output from a sensor that detects that a cylinder (e.g., a boom cylinder) of the attachment 103 has performed an operation to reach a stroke end. In this case, the reflection information is information of being drilling work in which the cylinder reaches a stroke end.

### [Modifications]

The present invention is not limited to the embodiment described above. The present invention can include the following aspects, for example.

### (A) Regarding data acquisition unit

The data acquisition unit includes the image-capturing device 41 as a means for acquiring the time-series work data for determining the work content, but is not limited thereto. The data acquisition unit may include, as a means for acquiring the time-series work data, an angle sensor that detects an angle of each of a boom, an arm, and a bucket that constitute the attachment, for example. The data acquisition unit may include, as a means for acquiring the time-series work data, a positioning sensor such as a GPS sensor or a GNSS sensor that detects the position of each of the boom, the arm, and the bucket that constitute the attachment, for example.

### (B) Regarding sensor

At least one of the plurality of sensors 42, 43, and 44 in the embodiment can be omitted.

### (C) Regarding image-capturing device

In the above embodiment, the image-capturing device 41 includes one camera, but the image-capturing device may include a stereo camera including a first camera and a second camera, for example. In such a case, the distance calculation unit 74 can calculate a more accurate distance based on a stereo image acquired by the stereo camera, and the coordinate calculation unit 75 can calculate more accurate coordinates based on the stereo image. The data acquisition unit may include a combination of the image-capturing device and a distance camera. The image-capturing device 41 may include a plurality of cameras of three or more.

### (D) Regarding camera controller and server

The function of the server 70 may be provided in the camera controller 60. In this case, the server 70 can be omitted.

### (E) Regarding construction machine

The tip end attachment is not limited to the bucket, and may be another tip end attachment such as a grapple, a crusher, a breaker, and a fork. The construction machine is not limited to the hydraulic excavator, and may be another construction machine. In the above embodiment, the construction machine includes the lower travelling body 101 that can travel, but the present invention is not limited thereto. In the present invention, the construction machine may have a structure in which the upper slewing body 102 is supported by a base installed at a specific place.

### (F) Regarding distance calculation unit

The distance calculation unit 74 is not essential but can be omitted. In a case where the distance calculation unit 74 is omitted, the image-capturing device 41 acquires the site image in a relatively narrow field of view including the construction machine 100 and the dump truck 92 at the work site in order for the reflection information generation unit 76 to generate reflection information of being loading work of a load object onto the dump truck 92. This enables the reflection information generation unit 76 to generate the reflection information based on the work content of the construction machine 100 input from the work content determination unit 73 and information regarding the object input from the object extraction unit 72.

In a case where the distance calculation unit 74 is omitted, the image-capturing device 41 acquires the site image in a relatively narrow field of view including the construction machine 100, the construction material 94, and the worker 93 at the work site in order for the reflection information generation unit 76 to generate reflection information of being load hoisting work of pulling up the construction material 94 such as the pipe. This enables the reflection information generation unit 76 to generate the reflection information based on the work content (the lifting work) of the construction machine 100 input from the work content determination unit 73 and information regarding the object input from the object extraction unit 72.

In a case where the distance calculation unit 74 is omitted, the image-capturing device 41 acquires the site image in a relatively narrow field of view including the construction machine 100 and the worker 93 at the work site in order for the reflection information generation unit 76 to generate reflection information of being irregular drilling work in which the worker 93 exists within a work range of the construction machine 100. This enables the reflection information generation unit 76 to generate the reflection information based on the work content (the drilling work) of the construction machine 100 input from the work content determination unit 73 and information regarding the object input from the object extraction unit 72.

### (G) Regarding coordinate calculation unit

The coordinate calculation unit 75 is not essential but can be omitted.

### (H) Regarding estimation of posture of construction machine based on image

In the embodiment, estimation of the posture of the construction machine 100 based on the site image by the machine posture estimation unit 71 is performed using a neural network (posture estimation algorithm) machine-learned in advance, but the present invention is not limited thereto. In the present invention, estimation of the posture of the construction machine may be performed by another method other than the method using the neural network. Examples of the other method include a method using machine learning other than the method using the neural network, and time series algorithm.

Features of the above-described embodiment are summarized as follows.

A work information generation system according to one aspect of the present invention is a work information generation system that generates work information of a construction machine at a work site, the work information generation system including: a data acquisition unit that acquires time-series work data for determining work content of work performed by the construction machine and attendant situation data representing an attendant situation including at least one of a situation of the construction machine and a situation around the construction machine when the work is performed; a work content determination unit that determines the work content based on the time-series work data; and a reflection information generation unit that generates, based on the work content and the attendant situation data, reflection information, which is information in which the attendant situation is reflected on the work content.

In this aspect, since the work-related person can obtain the reflection information in which the attendant situation is reflected in the work content of the construction machine at the work site, the reflection information having been obtained can be effectively used for the various purposes.

Here, the time-series work data for determining the work content can be obtained by an angle sensor that detects an angle of each of the boom, the arm, and the bucket that constitute the attachment, for example. The time-series work data can also be obtained by a positioning sensor such as a GPS sensor or a GNSS sensor that detects the position of each of the boom, the arm, and the bucket that constitute the attachment, for example. However, in these aspects, it is necessary to mount a plurality of angle sensors and a plurality of positioning sensors to the construction machine. On the other hand, in a case where the time-series work data includes a time-series image including the construction machine, it is not necessary to mount the plurality of angle sensors or the plurality of positioning sensors to the construction machine. A specific explanation is as follows.

In the above aspect, preferably, the data acquisition unit includes an image-capturing device that acquires a site image including an image of the construction machine at the work site, and the time-series work data includes the site image acquired in time series by the image-capturing device.

In this aspect, the work content is determined based on the site image that is time-series acquired by the image-capturing device. This makes it possible to determine work content of the construction machine without newly mounting, onto the construction machine, the plurality of angle sensors and the plurality of positioning sensors for determining work content of the construction machine.

In the above aspect, the work information generation system may further include a machine posture estimation unit that estimates a posture of the construction machine based on the site image, and the work content determination unit may determine the work content based on a time-series change in the posture estimated by the machine posture estimation unit.

In this aspect, the work content of the construction machine can be determined based on a dynamic change in posture of the construction machine. Specifically, the work of the construction machine includes, for example, the loading work, the lifting work, the drilling work, and the grading work as described above, and each of these works is performed with a specific time-series change in terms of the posture of the construction machine. Therefore, a time-series change in the posture of the construction machine is relevant to the work content of the construction machine, and serves as an index for determination of the work content.

In the above aspect, preferably, the site image further includes an image of an object different from the construction machine among objects existing at the work site, at least a part of the attendant situation data includes the site image including an image of the object, the work information generation system further includes an object extraction unit that extracts the object based on the site image including an image of the object, and the reflection information generation unit generates the reflection information based on the work content determined based on the site image and information regarding the object extracted by the object extraction unit.

This aspect can generate the reflection information based on the work content determined based on the site image and information regarding the object extracted by the object extraction unit, even if a sensor for detecting the object is not provided at the work site.

In the above aspect, preferably, the work information generation system further includes a distance calculation unit that calculates a relative distance between the construction machine and the object based on the site image, and information regarding the object includes the relative distance between the construction machine and the object.

The relative distance between the construction machine and the object at the work site becomes an important index that indicates depth of mutual relationship at the work site.

Therefore, this aspect can generate, based on the relative distance calculated by the distance calculation unit and the work content, the reflection information that is more accurate, even if a sensor for specifying the relative distance between the construction machine and the object is not provided at the work site.

In the above aspect, the construction machine is a first construction machine, the site image includes an image of the first construction machine and an image of a second construction machine, which is different from the first construction machine, and the work content determination unit may determine work content of each of the first construction machine and the second construction machine based on the site image acquired in time series by the image-capturing device.

In this aspect, it is possible to determine work contents of a plurality of construction machines based on the site image acquired by the image-capturing device.

In the above aspect, the work information generation system further includes a prohibited work storage unit that stores a combination of the work of the construction machine and an attendant work, which is another work that is prohibited in advance from being performed simultaneously with the work by the construction machine, the data acquisition unit is configured to acquire data regarding the attendant work constituting at least a part of the attendant situation data, and the reflection information generation unit may generate the reflection information including information regarding whether or not the work and the attendant work are performed simultaneously based on the work content and data regarding the attendant work.

This aspect enables the work-related person to more accurately perform evaluation of the work content, evaluation of the operator, and the like based on the reflection information including information (prohibited work information) regarding whether or not the work and the attendant work are performed simultaneously.

In the above aspect, the construction machine includes an operation device that receives an operation for performing the attendant work, and the data acquisition unit may include a pressure sensor that acquires, as data regarding the attendant work, pressure data indicating that the operation device has received the operation.

In this aspect, that the attendant work has been performed is accurately detected based on the pressure data indicating that the operation device has received the operation. This allows the work-related person to obtain the prohibited work information that is more accurate.

In the above aspect, the work information generation system may further include a target operation storage unit that stores a target operation set in advance as a target of an operation of the construction machine when the construction machine performs the work, the data acquisition unit may be configured to acquire data that constitutes at least a part of the attendant situation data, the data regarding a difference between the target operation and an actual operation that is an operation of the construction machine when the construction machine actually performs the work, and the reflection information generation unit may generate the reflection information including information regarding a level of the work of the construction machine based on the work content and data regarding the difference.

This aspect enables the work-related person to more accurately perform evaluation of the work content, evaluation of the operator, and the like based on the reflection information including information (work level information) regarding a level of the work.

In the above aspect, the work information generation system preferably further includes a reflection information storage unit that stores the reflection information as a history.

This aspect enables the work-related person to confirm, at an arbitrary timing, the reflection information stored as a history in the reflection information storage unit.

In the above aspect, preferably, the reflection information storage unit is provided in a server, and the server is communicably connected to a terminal via a network, and is configured to transmit the reflection information to the terminal in response to an inquiry request for inquiring the reflection information from the terminal.

This aspect enables the work-related person to confirm the reflection information by using the terminal communicably connected to the server via the network.

A work information generation method according to one aspect of the present invention is a method for generating work information of a construction machine at a work site, the work information generation method including: acquiring time-series work data for determining work content of work performed by the construction machine and attendant situation data representing an attendant situation including at least one of a situation of the construction machine and a situation around the construction machine when the work is performed; determining the work content based on the time-series work data; and generating, based on the work content and the attendant situation data, reflection information of the work content, which is information in which the attendant situation is reflected on the work content.

In this aspect, since the work-related person can obtain the reflection information in which the attendant situation is reflected in the work content of the construction machine at the work site, the reflection information having been obtained can be effectively used for the various purposes.

## Claims

1. A work information generation system that generates work information of a construction machine at a work site, the work information generation system comprising:
a data acquisition unit that acquires time-series work data for determining work content of work performed by the construction machine and attendant situation data representing an attendant situation including at least one of a situation of the construction machine and a situation around the construction machine when the work is performed;
a work content determination unit that determines the work content based on the time-series work data; and
a reflection information generation unit that generates, based on the work content and the attendant situation data, reflection information, which is information in which the attendant situation is reflected on the work content.

2. The work information generation system according to claim 1, wherein
the data acquisition unit includes an image-capturing device that acquires a site image including an image of the construction machine at the work site, and
the time-series work data includes the site image acquired in time series by the image-capturing device.

3. The work information generation system according to claim 2, further comprising:
a machine posture estimation unit that estimates a posture of the construction machine based on the site image,
wherein the work content determination unit determines the work content based on a time-series change in the posture estimated by the machine posture estimation unit.

4. The work information generation system according to claim 2 or 3, wherein
the site image further includes an image of an object different from the construction machine among objects existing at the work site,
at least a part of the attendant situation data includes the site image including an image of the object,
the work information generation system further includes an object extraction unit that extracts the object based on the site image including an image of the object, and
the reflection information generation unit generates the reflection information based on the work content determined based on the site image and information regarding the object extracted by the object extraction unit.

5. The work information generation system according to claim 4, further comprising:
a distance calculation unit that calculates a relative distance between the construction machine and the object based on the site image,
wherein information regarding the object includes the relative distance between the construction machine and the object.

6. The work information generation system according to any one of claims 2 to 5, wherein the construction machine is a first construction machine,
the site image includes an image of the first construction machine and an image of a second construction machine, which is different from the first construction machine, and
the work content determination unit determines work content of each of the first construction machine and the second construction machine based on the site image acquired in time series by the image-capturing device.

7. The work information generation system according to any one of claims 1 to 6, further comprising:
a prohibited work storage unit that stores a combination of the work of the construction machine and an attendant work, which is another work that is prohibited in advance from being performed simultaneously with the work by the construction machine,
wherein the data acquisition unit is configured to acquire data regarding the attendant work constituting at least a part of the attendant situation data, and
the reflection information generation unit generates the reflection information including information regarding whether or not the work and the attendant work are performed simultaneously based on the work content and data regarding the attendant work.

8. The work information generation system according to claim 7, wherein
the construction machine includes an operation device that receives an operation for performing the attendant work, and
the data acquisition unit includes a pressure sensor that acquires, as data regarding the attendant work, pressure data indicating that the operation device has received the operation.

9. The work information generation system according to any one of claims 1 to 8, further comprising:
a target operation storage unit that stores a target operation set in advance as a target of an operation of the construction machine when the construction machine performs the work,
wherein the data acquisition unit is configured to acquire data that constitutes at least a part of the attendant situation data, the data regarding a difference between the target operation and an actual operation that is an operation of the construction machine when the construction machine actually performs the work, and
the reflection information generation unit generates the reflection information including information regarding a level of the work of the construction machine based on the work content and data regarding the difference.

10. The work information generation system according to any one of claims 1 to 9, further comprising:
a reflection information storage unit that stores the reflection information as a history.

11. The work information generation system according to claim 10, wherein
the reflection information storage unit is provided in a server, and
the server is communicably connected to a terminal via a network, and is configured to transmit the reflection information to the terminal in response to an inquiry request for inquiring the reflection information from the terminal.

12. A work information generation method for generating work information of a construction machine at a work site, the work information generation method comprising:
acquiring time-series work data for determining work content of work performed by the construction machine and attendant situation data representing an attendant situation including at least one of a situation of the construction machine and a situation around the construction machine when the work is performed;
determining the work content based on the time-series work data; and
generating, based on the work content and the attendant situation data, reflection information, which is information in which the attendant situation is reflected on the work content.
